# FASCICULE DE BREVET EUROPEEN

(11) **EP 0 775 601 B1**
(45) Date de publication et mention de la délivrance du brevet: **24.05.2000**
(21) Numéro de dépôt: 96118525.3
(22) Date de dépôt: 19.11.1996
(51) Int. Cl.: B60C 23/04

(54) **Roue avec appui de sécurité et capteur de pression incorporé**
Rad mit Sicherheitsstütze und eingebautem Druckmessfühler
Tyre with a safety ring incorperating a pressure sensor

(30) Priorité: 27.11.1995 FR 9514521
(43) Date de publication de la demande: 28.05.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Drieux, Jean-Jacques, 63530 Volvic (FR)
(74) Mandataire: Dequire, Philippe Jean-Marie Denis

(56) Documents cités:
- EP-A- 0 407 126
- GB-A- 2 191 453
- US-A- 5 285 189

## Description

La présente invention concerne les roues équipées de pneumatiques, et plus précisément les roues comportant un appui de sécurité permettant le roulage malgré une perte de pression : et l'invention a pour objet un tel appui de sécurité avec un capteur de pression incorporé.

Depuis l'invention du pneumatique, les conducteurs de véhicules automobiles sont confrontés au problème de la perte de pression accidentelle, par exemple à la suite d'une crevaison : on sait en effet qu'un pneumatique dont la pression n'est pas correcte voit son comportement au roulage perturbé et la sécurité du véhicule et de ses occupants mise en danger.

On a remédié à cet inconvénient de deux manières : d'une part, en développant des systèmes de surveillance qui avertissent le conducteur d'une baisse de pression anormale, et d'autre part en installant sur les roues des dispositifs annulaires qui permettent au pneu dégonflé de s'y appuyer en conservant une partie de ses propriétés.

Les systèmes de surveillance actuels, comme le « M.T.M. » développé par la demanderesse, ou celui décrit dans la demande de brevet PCT n° WO 94/20 317 (Schrader Automotive Inc.) sont très satisfaisants dans la plupart des cas où l'on observe une perte de pression régulière. En effet, ils permettent d'informer le conducteur du dégonflement d'un ou plusieurs pneumatiques bien avant l'immobilisation forcée du véhicule.

Mais dans les cas exceptionnels d'une perte de pression brutale, par exemple à la suite d'un éclatement de pneumatique, les dispositifs annulaires d'appui de sécurité sont indispensables si l'on veut éviter l'immobilisation du véhicule.

Un exemple de roue équipée d'un appui de sécurité annulaire est décrit dans la demande de brevet français n° 2 713 558 (Michelin et Cie) dont la figure 2 montre la géométrie particulière de la roue, du pneumatique et de l'appui de sécurité. On peut également citer la demande de brevet français n° 2 713 557 (Michelin et Cie) qui a pour objet une jante cylindrique démunie de gorge pour permettre le montage de l'appui de sécurité sans réduire l'espace intérieur nécessaire pour les organes de freinage.

Or, l'installation d'un appui de sécurité sur une roue pose deux problèmes complémentaires :
- comme la durée de vie en appui d'un tel appui est très limitée, il est nécessaire d'avertir le conducteur dès la mise en appui du pneumatique sur l'appui pour éviter un roulage prolongé dans cette configuration ;
- d'autre part, un tel ensemble de sécurité (roue/appui de sécurité/système de surveillance de la pression) peut induire une impression illusoire de sécurité si, à la suite d'un incident quelconque telle un crevaison, le pneumatique est démonté puis remonté en omettant l'appui de sécurité. Comment avertir le conducteur du véhicule d'une telle erreur ?

La présente invention a précisément pour objet de résoudre simplement ces difficultés.

Dans ce qui suit, on entend par « capteur de pression » l'ensemble du capteur de pression proprement dit et de son électronique localement associée.

Suivant l'invention, un système de sécurité pour véhicule équipé de roues comprend une unité centrale et pour chaque roue un capteur de pression et un appui de sécurité annulaire destiné à être disposé radialement extérieurement sur la jante de la roue, ladite unité centrale et ledit capteur de pression ayant des moyens de communication entre eux, dans lequel le capteur de pression est disposé à l'intérieur du volume de l'appui de sécurité et l'unité centrale comprend des moyens d'alerte du non fonctionnement du capteur de pression.

Cette solution apporte un double avantage essentiel : d'une part, le capteur de pression n'exige aucun espace propre pour son installation sur la roue, et d'autre part, le fonctionnement normal du système de surveillance de la pression implique automatiquement la présence des appuis de sécurité. De plus, en équipant l'appui de sécurité avec le capteur de pression avant le montage dudit appui sur la roue, on constitue un ensemble qui peut être bien équilibré et qui apporte une sécurité maximale.

Suivant les dimensions du capteur de pression, diverses variantes de montage sont possibles sans sortir du cadre de l'invention.

Dans une première variante, le capteur de pression ayant une forme aplatie est inséré dans une fente transversale de l'appui annulaire.

Dans une autre variante, le capteur de pression ayant une forme parallélépipédique est inséré dans une gorge annulaire de l'appui de sécurité ouverte du côté extérieur : la fixation du capteur de pression est obtenue par l'intermédiaire d'une embase plate dont il est solidaire.

Cette embase peut être engagée dans une fente transversale de l'appui de diverses manières : en la glissant par le côté, en écartant les deux parois de la gorge, en la faisant tourner dans son plan, etc. Elle peut aussi être fixée à l'appui par collage, rivetage, etc..

L'invention sera mieux comprise à l'aide de la description de divers exemples, qui va suivre, donnée à titre non limitatif, en se référant au dessin annexé sur lequel :
- la Figure 1 est une vue en coupe schématique d'une jante de roue équipée d'un appui de sécurité ;
- la Figure 2 est une vue en coupe d'un capteur de pression ayant une forme aplatie, inséré dans un appui de sécurité ;
- les Figures 3 à 7 sont des vues en coupe d'un capteur de pression ayant une forme parallélépipédique, muni d'une embase pour sa fixation ;
- la Figure 8 est une vue en coupe d'une variante de montage d'un capteur de pression ayant une forme parallélépipédique.

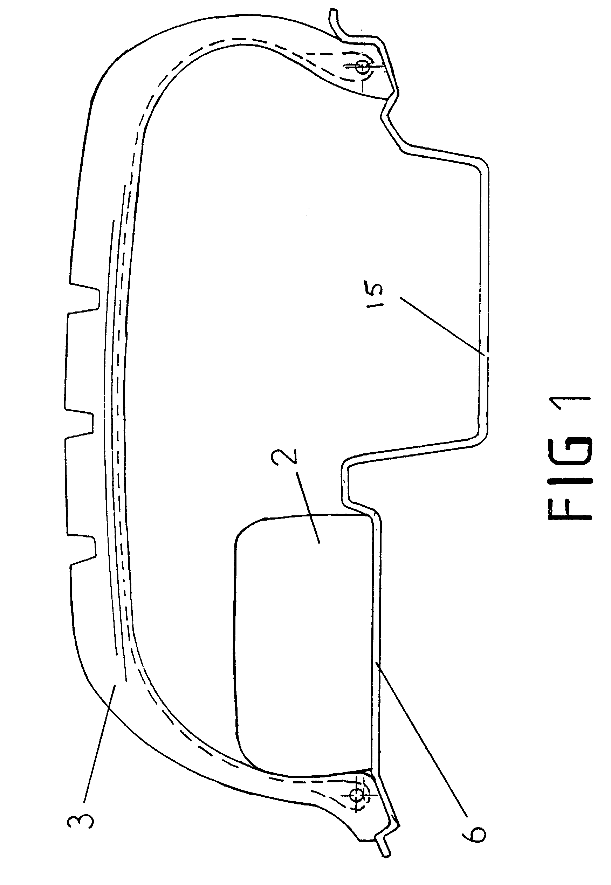

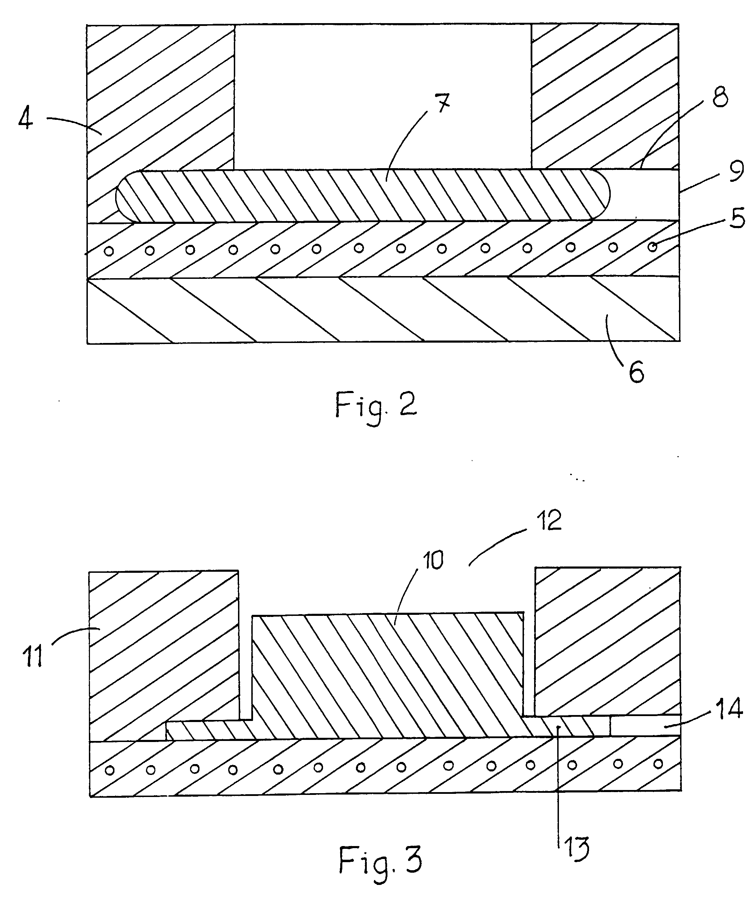

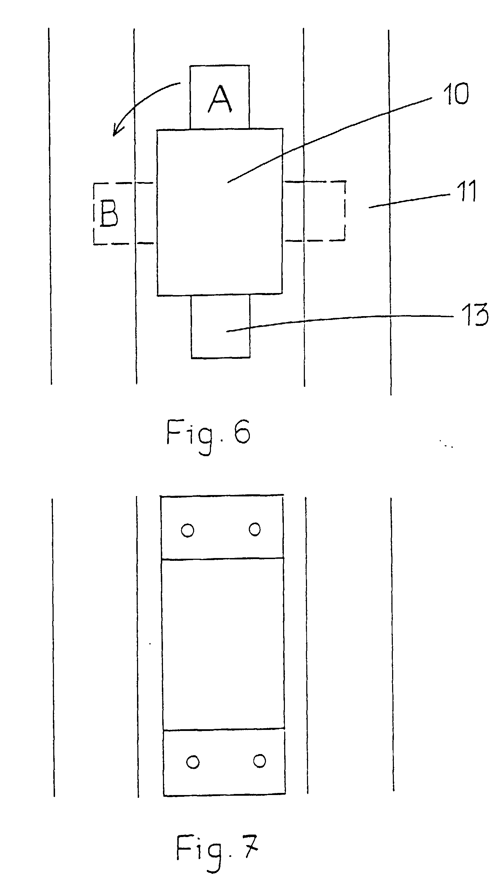

On voit sur la Figure 1 une jante 6 de roue équipée d'un appui annulaire de sécurité 2. La géométrie particulière de cette jante 6 de roue qui présente deux sièges de bourrelets de diamètres différents et une gorge de montage 15 est particulièrement adaptée pour la mise en place aisée de cet appui de sécurité. Cet ensemble permet le roulage malgré une baisse de pression importante dans le pneumatique 3. Dans le cas d'un tel roulage, l'intérieur du pneu déformé frotte sur la portée extérieure de l'appui provoquant un échauffement qui limite le rayon d'action disponible : il importe donc que le conducteur soit informé de la mise en appui des pneumatiques sur l'un au moins des appuis 2. A cet effet, l'appui 2 est équipé d'un capteur de pression 7 (voir figures 2 à 8) qui transmet au conducteur, par l'intermédiaire d'une unité centrale (non représentée), une alarme lorsque la pression de l'un au moins des pneumatiques est en dessous d'un seuil donné correspondant à cette mise en appui. Le capteur de pression envoie aussi, périodiquement, à l'unité centrale des signaux garantissant son bon fonctionnement. Un tel ensemble, unité centrale et capteur de pression, est notamment divulgué dans le brevet US 5 285 189.

Dans ce brevet, chaque capteur de pression est doté d'un code d'identification unique et transmet périodiquement par radio à une unité centrale des signaux comprenant au moins ce code d'identification. L'unité centrale, après une phase d'apprentissage, connaît les codes d'identification des différents capteurs de pression qui équipent le véhicule et déclenche une alarme lors de l'absence de réception de l'un au moins des signaux d'identification pendant un temps donné. Le conducteur est donc averti dès que l'un au moins des capteurs de pression ne fonctionne plus ou, et c'est particulièrement important dans le montage selon l'invention, en cas d'absence du capteur en raison par exemple d'un oubli lors d'un remontage de la roue sans l'appui après un démontage.

Sur la Figure 2, on voit un appui de sécurité 4 réalisé en élastomère et renforcé par une nappe de fils 5 du côté intérieur de l'anneau, c'est à dire du côté qui est en contact avec la jante 6. Suivant l'invention, dans le cas d'un capteur de pression 7 ayant une forme aplatie, on pratique une fente transversale 8 dans l'appui, à l'extérieur de la nappe de renfort 5 : cette fente a une section légèrement supérieure à celle du capteur de pression, et elle débouche en 9 sur un côté de l'appui pour permettre la mise en place du capteur de pression 7. Cette fente peut être obtenue au cours du moulage de l'appui annulaire. Dans cet exemple, on a représenté un appui avec une section en U, mais la section pourrait avoir une forme différente et notamment être pleine.

Sur la figure 3, on voit un capteur de pression 10 de forme parallélépipédique et ayant des dimensions plus importantes, mais qui sont toutefois inférieures à la largeur et à la hauteur de l'appui annulaire 11 : ce dernier a une section en U formant une gorge 12 ouverte du côté extérieur : le capteur de pression 10 est disposé dans cette gorge : une embase 13 solidaire du capteur de pression permet sa fixation par engagement dans une fente transversale 14 pratiquée dans le fond de la gorge 12.

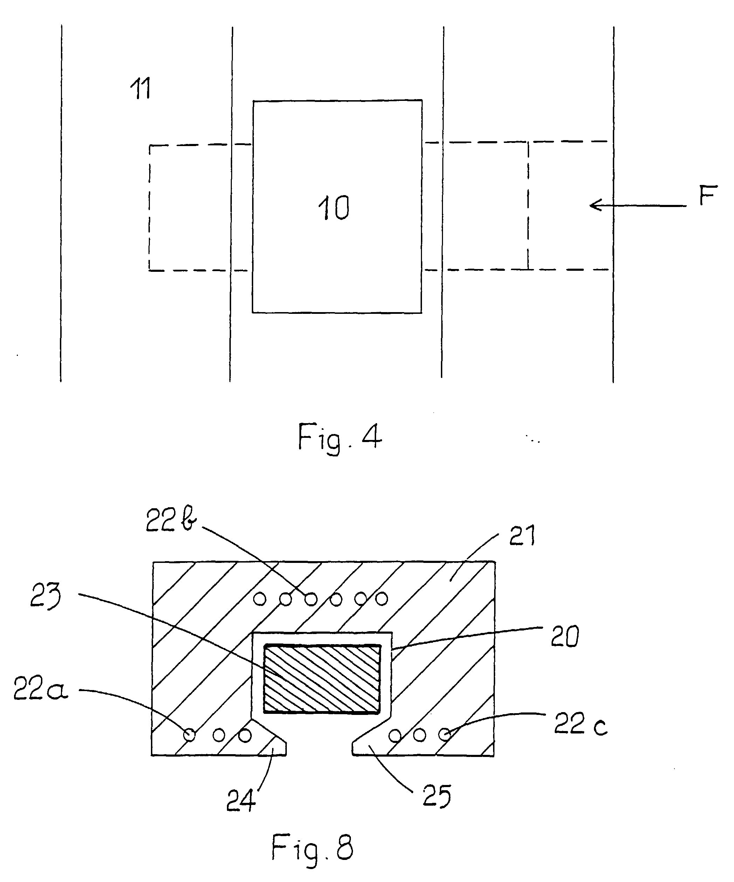

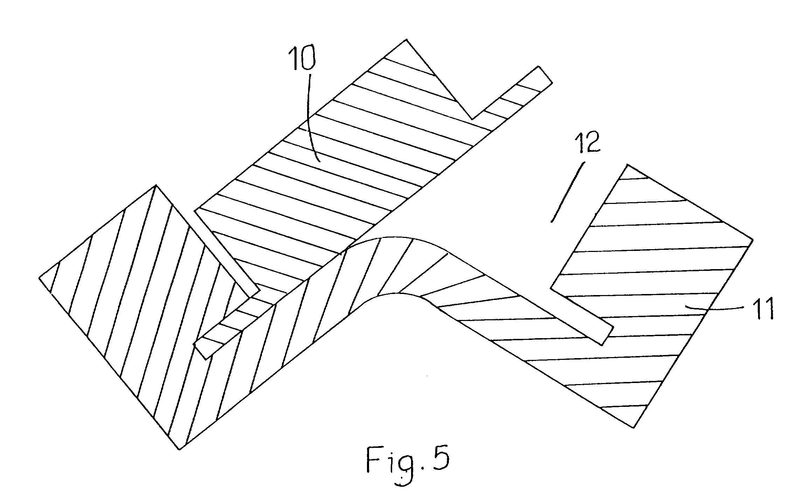

L'engagement de l'embase 13 dans la fente 14 s'obtient sans difficulté :
- soit en glissant l'embase par le côté, suivant la flèche F (Figure 4), avant de la solidariser avec le capteur de pression 10,
- soit en pliant l'appui annulaire 11 de manière à écarter localement les deux bords de la gorge 12 (Figure 5),
- soit par rotation de l'embase 13 de la position A à la position B (Figure 6),
- soit par collage, rivetage, etc. (Figure 7).

Sur la Figure 8, on a représenté une autre variante : la gorge 20 de l'appui annulaire 21 est ouverte du côté intérieur : la nappe de renfort 22 est subdivisée en trois parties a, b, c dont l'une, la partie médiane 22 b, a un diamètre plus grand que les deux autres : le capteur de pression 23 est maintenu en place par le serrage de l'appui annulaire sur la jante : le capteur de pression est protégé par deux lèvres 24 et 25 de la gorge.

Dans toutes les variantes décrites, on voit que le capteur de pression est bien protégé de l'écrasement en cas de roulage après une perte de pression importante ayant provoqué l'appui du pneumatique sur l'anneau de sécurité.

L'assemblage de l'appui et du capteur de pression suivant l'invention permet de bien équilibrer l'ensemble avant son montage sur la roue.

Un tel ensemble, roue, appui de sécurité et capteur de pression offre une sécurité maximale, en particulier, une absence pour une cause quelconque de l'appui de sécurité à l'intérieur de la cavité du pneumatique 3 va entraîner une alarme de l'unité centrale avertissant le conducteur du véhicule.

Cet ensemble avertit aussi le conducteur de la mise en appui d'un pneumatique sur son appui. Le conducteur doit alors se conformer aux instructions du fabriquant de l'appui lui donnant les kilométrages et vitesses à ne pas dépasser.

## Revendications

1. Système de sécurité pour véhicule équipé de roues comprenant une unité centrale et pour chaque roue un capteur de pression (7, 10, 23) et un appui de sécurité (2, 4, 11, 21) annulaire destiné à être disposé radialement extérieurement sur la jante (6) de la roue, ladite unité centrale et ledit capteur de pression (7, 10, 23) ayant des moyens de communication entre eux, dans lequel le capteur de pression (7, 10, 23) est disposé à l'intérieur du volume de l'appui de sécurité (2, 4, 11, 21) et l'unité centrale comprend des moyens d'alerte du non fonctionnement du capteur de pression (7, 10, 23).

2. Système de sécurité suivant la revendication 1, dans lequel le capteur de pression (7) ayant une forme aplatie est inséré dans une fente transversale (8) de l'appui annulaire (4).

3. Système de sécurité suivant la revendication 1, dans lequel le capteur de pression (10) ayant une forme parallélépipédique est inséré dans une gorge annulaire (12) de l'appui de sécurité (11) ouverte du côté extérieur.

4. Système de sécurité suivant la revendication 3, dans lequel ledit capteur de pression (10) est fixé dans ladite gorge (12) par l'intermédiaire d'une embase (13) dont il est solidaire et qui est engagée dans une fente transversale (14) pratiquée dans l'appui annulaire (11).

5. Système de sécurité suivant la revendication 3, dans lequel ledit capteur de pression (10) est fixé dans ladite gorge (12) par l'intermédiaire d'une embase (13) dont il est solidaire et qui est fixée sur l'appui annulaire (11).

## Patentansprüche

1. Sicherheitssystem für ein mit Rädern versehenes Fahrzeug, das eine zentrale Einheit und für jedes Rad einen Druckmeßfühler (7, 10, 23) und eine ringförmige Sicherheitsstütze (2, 4, 11, 21) aufweist, die radial außen auf der Felge (6) des Rads angeordnet wird, wobei die zentrale Einheit und der Druckmeßfühler (7, 10, 23) Mittel zur gegenseitigen Verständigung aufweisen, bei dem der Druckmeßfühler (7, 10, 23) innerhalb des Volumens der Sicherheitsstütze (2, 4, 11, 21) angeordnet ist und die zentrale Einheit Mittel zur Warnung über den Betriebsausfall des Druckmeßfühlers (7, 10, 23) aufweist.

2. Sicherheitssystem nach Anspruch 1, bei dem der Druckmeßfühler (7) abgeflachter Form in einen Querschlitz (8) der ringförmigen Stütze (4) eingeführt wird.

3. Sicherheitssystem nach Anspruch 1, bei dem der Druckmeßfühler (10) parallelepipedischer Form in eine nach außen offene, ringförmige Kehle (12) der Sicherheitsstütze (11) eingeführt wird.

4. Sicherheitssystem nach Anspruch 3, bei dem der Druckmeßfühler (10) in der Kehle (12) über einen Sockel (13) befestigt wird, mit dem er fest verbunden ist und der in einen Querschlitz (14) eingeführt wird, der in die ringförmige Stütze (11) eingearbeitet ist.

5. Sicherheitssystem nach Anspruch 3, bei dem der Druckmeßfühler (10) in der Kehle (12) über einen Sockel (13) befestigt wird, mit dem er fest verbunden ist und der an der ringförmigen Stütze (11) befestigt ist.

## Claims

1. A safety system for a vehicle fitted with wheels comprising a central unit and, for each wheel, a pressure sensor (7, 10, 23) and an annular safety support (2, 4, 11, 21) intended to be arranged radially toward the outside on the rim (6) of the wheel, said central unit and said pressure sensor (7, 10, 23) having means for communicating with each other, in which system the pressure sensor (7, 10, 23) is arranged inside the volume of the safety support (2, 4, 11, 21) and the central unit comprises means for drawing attention to the non-operation of the pressure sensor (7, 10, 23).

2. A safety system according to claim 1, in which the pressure sensor (7) having a flattened shape is inserted in a transverse slot (8) in the annular support (4).

3. A safety system according to claim 1, in which the pressure sensor (10) having a parallelepipedal shape is inserted in an annular groove (12) of the safety support (11) which is open on the outer side.

4. A safety system according to claim 3, in which said pressure sensor (10) is fixed in said groove (12) by means of a base (13) to which it is secured and which is engaged in a transverse slot (14) made in the annular support (11).

5. A safety system according to claim 3, in which said pressure sensor (10) is fixed in said groove (12) by means of a base (13) to which it is secured and which is fixed to the annular support (11).
